# EUROPÄISCHE PATENTSCHRIFT

(11) **EP 0 433 673 B1**
(45) Veröffentlichungstag und Bekanntmachung des Hinweises auf die Patenterteilung: **02.02.1994**
(21) Anmeldenummer: 90122003.8
(22) Anmeldetag: 17.11.1990
(51) Int. Cl.: B60T 8/36, B60T 13/68

(54) **Drucksteuerventil**
Pressure control valve
Valve de commande de pression

(30) Priorität: 22.12.1989 DE 3942563; 21.05.1990 DE 4016312
(43) Veröffentlichungstag der Anmeldung: 26.06.1991
(73) Patentinhaber: ROBERT BOSCH GMBH, 70442 Stuttgart (DE)
(72) Erfinder: Angermair, Ernst, W-7120 Bietigheim-Bissingen (DE)

(56) Entgegenhaltungen:
- EP-A- 0 147 585
- EP-A- 0 181 643
- DE-A- 3 345 697
- DE-A- 3 821 044
- FR-A- 2 267 913

## Beschreibung

### Stand der Technik

Die Erfindung bezieht sich auf ein Drucksteuerventil für druckluftbetätigte Fahrzeugbremsanlagen nach der Gattung des Hauptanspruchs.

Derartige Drucksteuerventile sind bekannt (DE-OS 33 45 697). Ein solches Drucksteuerventil weist eine über einen Druckmitteleingang mit einer Druckmittelquelle verbindbare Druckmitteleingangskammer und eine mit einem Verbraucher, zum Beispiel dem Radbremszylinder eines Fahrzeugs, verbundene Druckmittelausgangskammer auf.

Die Druckmittelausgangskammer ist einerseits über ein steuerbares Einlaßventil mit der Druckmitteleingangskammer und andererseits über ein steuerbares Auslaßventil mit der Atmosphäre verbindbar. Ein zur Betätigung des Auslaßventils dienender Betätigungskolben begrenzt mit einer ersten Wirkfläche die Druckmittelausgangskammer und mit einer der ersten Wirkfläche entgegengerichteten zweiten Wirkfläche eine Steuerkammer. Die Steuerkammer ist über ein magnetbetätigbares Steuerventil wahlweise mit der Atmosphäre oder mit der Druckmitteleingangskammer verbindbar.

Der Betätigungskolben wird vom Druck in der Druckmittelausgangskammer in Öffnungsrichtung des Auslaßventils und vom Druck in der Steuerkammer in Schließrichtung des Auslaßventils beaufschlagt.

Die Druckeinsteuerung in den Verbraucher erfolgt von einer Druckmittelquelle über ein als kombiniertes Einlaß- und Auslaßventil ausgebildetes Ventil, zum Beispiel ein Bremsventil, und das geöffnete Einlaßventil des Drucksteuerventils bei gleichzeitiger Beaufschlagung der dem Auslaßventil des Drucksteuerventils zugeordneten Steuerkammer mit dem Druckmittel in der Druckmitteleingangskammer.

Der Druckabbau im Verbraucher erfolgt ebenfalls über das in der Offenstellung befindliche Einlaßventil des Drucksteuerventils sowie die Druckmitteleingangskammer und das Auslaßventil des dem Drucksteuerventil vorgeschalteten kombinierten Einlaß- und Auslaßventils. Dabei wird die Steuerkammer des Auslaßventils des Drucksteuerventils über das zugeordnete Steuerventil ebenfalls über die Druckmitteleingangskammer entlüftet.

Lediglich dann, wenn ein geregelter Druckabbau im Verbraucher erfolgen soll, wird durch Ansteuerung des dem Auslaßventil des Drucksteuerventils zugeordneten Steuerventils der Druck im Verbraucher über das Auslaßventil des Drucksteuerventils abgesenkt.

Bei nicht geregeltem Druckabbau im Verbraucher erfolgt die Entlüftung des Verbrauchers also stets über das dem Drucksteuerventil vorgeschaltete Einlaß- und Auslaßventil oder auch über ein vorgeschaltetes Relaisventil, d.h., das Drucksteuerventil stellt in einem solchen Fall nur einen Durchgang dar.

Von Nachteil ist bei diesem bekannten Drucksteuerventil, daß der Entlüftungsvorgang des Verbrauchers relativ lang ist. außerdem ist aus DE-A-38 21 044 ein Drucksteuerventil mit einem Einlaßventil zwischen einer Durckmittel-Eingangskammer und einer Duckmittel-Ausgangskammer gemäß dem Oberbegriff des Anspruchs 1 bekannt, welche in Verbindung mit einem Verbraucher steht. Ebenfalls ist ein Auslaßventil zwischen der Druckmittel-Ausgangskammer und einer Entlastungsstelle vorgesehen. Für Betätigung des Einlaßventils sowie des Auslaßventils ist jeweils eine Membran bestimmt, die in Schließrichtung des jeweiligen Ventils von einem Druck in einer zugeordneten Steuerkammer beaufschlagbar ist. Die Steuerkammer des Einlaßventils ist mittels eines ersten, magnetbetätigbaren Steuerventils beim elektrisch gesteuerten Halten oder Abbauen des Drucks in der Druckmittel-Ausgangskammer mit der Druckmittel-Eingangskammer oder elektrisch stromlos mit dem Verbraucher verbindbar. Die Steuerkammer des Auslaßventils ist stromlos ebenfalls mit dem Verbraucher und elektrisch betatigt mit der Entlastungsstelle verbindbar.

Das bekannte Drucksteuerventil weist den Mangel auf, daß beim Bremsdruckaufbau das Auslaßventil verzögert schließt, weil sich zunächst in der Druckmittel-Ausgangskammer ein Druck aufbauen muß, bevor dieser in der Steuerkammer des Auslaßventils wirken kann. Auch ist das bekannte Drucksteuerventil beim normalen, elektrisch ungesteuerten Bremselösen nicht problemfrei, da sich der Druck im Verbraucher nur über einen mit der Druckmittel-Ausgangskammer in Verbindung stehenden Kanal, ein im Bypass zum Steuerventil des Einlaßventils angeordnetes Rückschlagventil und einen weiteren Kanal sowie der Druckmittel-Eingangskammer zu einem Bremsventil abbauen kann. Hierdurch ergibt sich eine Verzögerung des Bremsdruckabbaus.

Ferner ist aus FR-A-2 267 913 ein Drucksteuerventil mit einer Druckmittel-Eingangskammer bekannt, die über ein Einlaßventil mit einer Druckmittel-Ausgangskammer verbindbar ist. Die Druckmittel-Ausgangskammer ist außerdem über ein Auslaßventil mit der Atmosphäre verbindbar. Das Einlaßventil besitzt eine Membran, die in Schließrichtung des Ventils von einem Druck in einer Steuerkammer beaufschlagbar ist. Das Drucksteuerventil weist ein erstes Steuerventil auf, mit dem ein erster Verbindungskanal zwischen der Steuerkammer des Einlaßventils und der Druckmittel-Eingangskammer überwachbar ist. Das Drucksteuerventil hat auch eine zur Betätigung des Auslaßventils bestimmte Membran, die in Schließrichtung des Auslaßventils von einem Druck in einer zweiten Steuerkammer beaufschlagbar ist. Die zweite Steuerkammer ist über ein zweites Steuerventil absperrbar oder mit der Atmosphäre verbindbar. Außerdem weist das bekannte Drucksteuerventil eine Verbindung zwischen der Druckmittel-Ausgangskammer und der Steuerkammer des Auslaßventils auf.

Beim ungeregelten Druckaufbau wird das Einlaßventil vom Druck in der Druckmittel-Eingangskammer geöffnet, da die Steuerkammer des Einlaßventils über Kanäle an Atmosphäre liegt. Das Auslaßventil bleibt geschlossen, da ein Druckaufbau in seiner Steuerkammer über die Verbindung von der Druckmittel-Ausgangskammer her erfolgt.

Beim ungeregelten Druckabbau bleibt, auch wenn dieser rasch erfolgt, das Auslaßventil geschlossen, da der Druck in der zugeordneten Steuerkammer wegen der Drosselwirkung der Verbindung hoher ist als der Druck in der Druckmittel-Ausgangskammer, der sich nur über das offene Einlaßventil abbauen kann. Dabei ist jedoch kein Restdruckabbau im Verbraucher möglich, da eine die Membran des Einlaßventils belastende Feder dieses bei geringem Druck schlieBt und somit eine Verbindung zwischen der Druckmittel-Ausgangskammer und der Druckmittel-Eingangskammer unterbricht.

### Vorteile der Erfindung

Das erfindungsgemäße Drucksteuerventil mit dem kennzeichnenden Merkmal des Hauptanspruchs hat demgegenüber den Vorteil, daß es sowohl beim normalen Bremsdruckaufbau als auch beim normalen Druckabbau sehr schnell auf mittels des vorgeordneten Bremsventils erzeugte Druckänderungen reagiert. Beim Druckaufbau steht nämlich unmittelbar nach dem Einsteuern von Druckluft in die Druckmittel-Eingangskammer auch Steuerdruck in gleicher Höhe in der Steuerkammer des Auslaßventils an, so daß dieses mit dem Öffnen des Einlaßventils zugleich geschlossen wird und verbraucherseitig kein unerwünschter Druckverlust zur Entlastungsstelle hin auftreten kann. Dagegen öffnet das Auslaßventil beim Bremsdruckabbau unverzögert, da der Druck in seiner Steuerkammer dem Druckabbau in der Druckmittel-Eingangskammer unmittelbar folgt, während das Einlaßventil vom verbraucherseitigen Druck in seiner Steuerkammer zunächst geschlossen gehalten wird.

Durch die in den Unteransprüchen aufgeführten Maßnahmen sind vorteilhafte Weiterbildungen und Verbesserungen des im Hauptanspruch angegeben Drucksteuerventils möglich.

Insbesondere ist die im Anspruch 3 angegebene Maßnahme vorteilhaft, als hierdurch einerseits eine feinfühlige Abstufbarkeit des Druckes im Verbraucher über das Einlaßventil sowie die Druckmitteleingangskammer und andererseits ein Abbau des Restdrucks im Verbraucher zur Druckmitteleingangskammer hin ermöglicht wird, was bei restdruckempfindlichen Verbrauchern, wie Scheibenbremsen, von Bedeutung ist.

Die in den weiteren Unteransprüchen aufgeführten Maßnahmen betreffen vorteilhafte Ausgestaltungen für die Anordnung des Verbindungskanals.

### Zeichnung

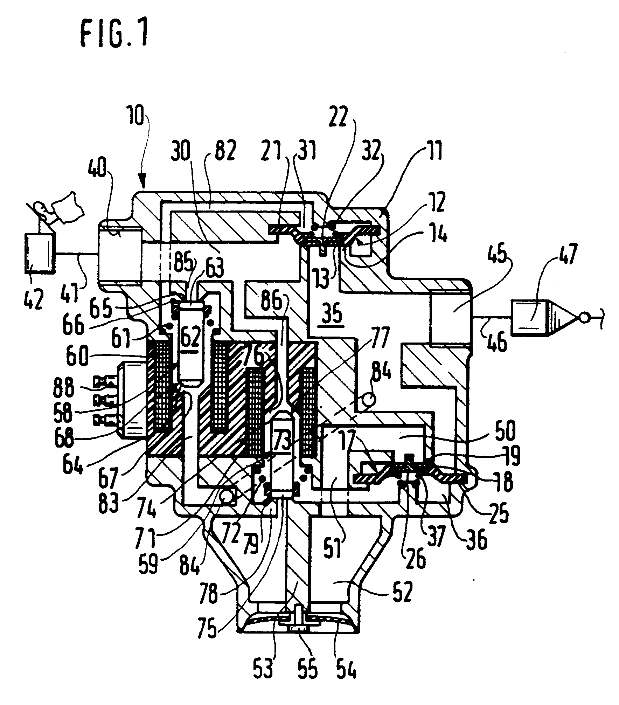

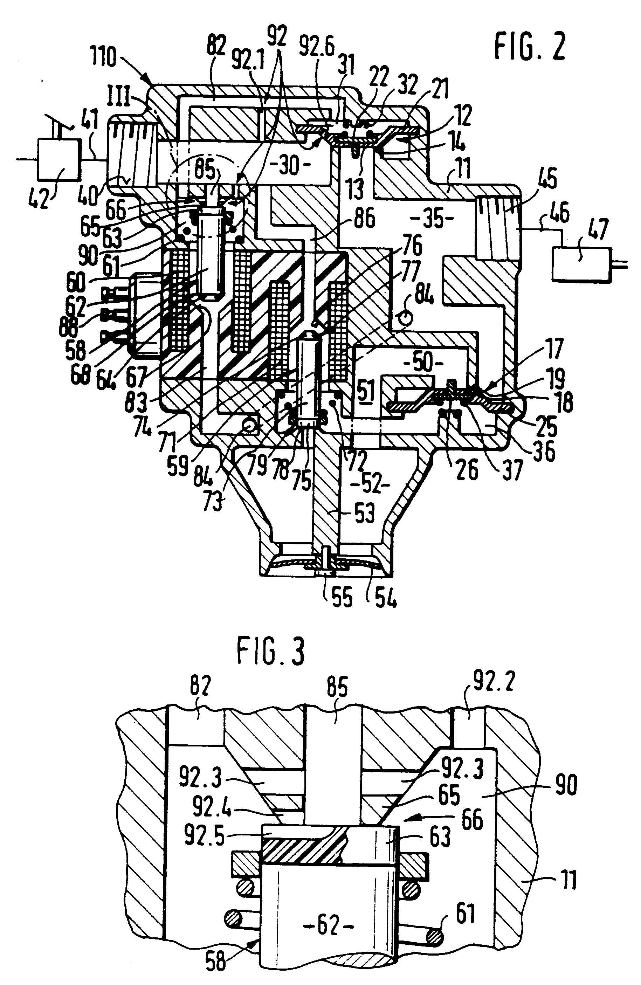

Ausführungsbeispiele der Erfindung sind in der Zeichnung vereinfacht dargestellt und in der nachfolgenden Beschreibung näher erläutert. Es zeigen Figur 1 einen Schnitt durch ein Drucksteuerventil als erstes Ausführungsbeispiel, Figur 2 ebenfalls einen Schnitt durch eine zweite Ausführungsform eines Drucksteuerventils mit Varianten der Anordnung eines Verbindungskanals zwischen einer Steuerkammer eines Einlaßventils und einer Druckmitteleingangskammer sowie Figur 3 als Einzelheit III in Figur 2 einen Ventilbereich in anderem Maßstab.

### Beschreibung der Ausführungsbeispiele

In Figur 1 ist ein Drucksteuerventil 10 für eine druckluftbetätigte Fahrzeugbremsanlage dargestellt. Das Drucksteuerventil 10 hat ein Gehäuse 11, in dem ein steuerbares Einlaßventil 12 angeordnet ist. Dieses besteht aus einem Ventilkörper 13 und einem gehäusefesten Ventilsitz 14. Im Gehäuse 11 ist außerdem ein Auslaßventil 17 vorgesehen, das aus einem Ventilkörper 18 und einem gehäusefesten Ventilsitz 19 besteht.

Das Einlaßventil 12 ist von einem als Membran 21 ausgebildeten Betätigungskolben betätigbar, welcher mit seinem äußeren Randbereich im Gehäuse 11 befestigt ist und eine zentrisch angeordnete, den Ventilkörper 13 tragende metallische Armierung 22 aufweist. In gleicher Weise ist das Auslaßventil 17 von einem als Membran 25 ausgebildeten Betätigungskolben betätigbar. Dieser ist mit seinem äußeren Randbereich im Gehäuse 11 befestigt und hat ebenfalls eine zentrisch angeordnete, den Ventilkörper 18 tragende metallische Armierung 26.

Die Membran 21 des Einlaßventils 12 begrenzt mit ihrer dem Ventilkörper 13 zugewandten Wirkfläche eine Druckmitteleingangskammer 30 und mit ihrer der Druckmitteleingangskammer abgewandten zweiten Wirkfläche eine Steuerkammer 31. Eine in der Steuerkammer 31 angeordnete, am Gehäuse 11 abgestützte Feder 32 beaufschlagt die Membran 21 in Schließstellung des Einlaßventils 12.

In gleicher Weise begrenzt die dem Auslaßventil 17 zugeordnete Membran 25 mit ihrer dem Ventilkörper 18 des Auslaßventils zugewandten ersten Wirkfläche eine Druckmittelausgangskammer 35 und mit ihrer der Druckmittelausgangskammer abgewandten Wirkfläche eine Steuerkammer 36. In dieser ist ebenfalls eine am Gehäuse 11 abgestützte Feder 37 angeordnet, welche die Membran 25 in Schließrichtung des Auslaßventils 17 belastet.

Über den im Gehäuse 11 angeordneten Druckmitteleingang 40 sowie eine an diesen angeschlossene Druckmittelleitung 41 ist die Druckmitteleingangskammer 30 mit einem als Bremsventil 42 ausgebildeten kombinierten Einlaß- und Auslaßventil verbunden, welches wiederum mit einer nicht dargestellten Druckmittelquelle in Verbindung steht. Die Druckmittelausgangskammer 35 des Gehäuses 11 ist über einen Druckmittelausgang 45 und eine Druckmittelleitung 46 mit einem als Bremszylinder 47 ausgebildeten Verbraucher verbunden.

Eine vom Auslaßventil 17 gegen die Druckmittelausgangskammer 35 absperrbare Kammer 50 im Gehäuse 11 ist über einen Kanal 51 des Gehäuses mit einem zur Atmosphäre hin führenden Entlüftungsraum 52 verbunden. Im Entlüftungsraum 52 ist zentrisch ein gehäusefester Zapfen 53 angeordnet, an welchem eine den Entlüftungsraum abdeckende, als Rückschlagventil ausgebildete elastische Klappe 54 vorgesehen ist. Diese ist an der freien Stirnseite des Zapfens 53 mit einem Niet 55 befestigt und in Richtung auf die Atmosphäre zu in die Offenstellung bringbar.

Im Gehäuse 11 sind zwei als Steuerventile 58, 59 für das Einlaßventil 12 und das Auslaßventil 17 dienende Elektromagnetventile angeordnet.

Das erste Steuerventil 58 für das Einlaßventil 12 des Drucksteuerventils 10 setzt sich aus einer Spule 60 mit Ankerführungsrohr und einem gegen die Kraft einer Feder 61 verschiebbar angeordneten Anker 62 zusammen, der an seinen aneinander abgewandten Stirnseiten je einen Ventilkörper 63 und 64 trägt. Der eine Ventilkörper 63 bildet mit einem ersten Ventilsitz 65 ein Einlaßsteuerventil 66 und der andere Ventilkörper 64 mit einem zweiten Ventilsitz 67 ein Auslaßsteuerventil 68.

Das zweite Steuerventil 59 für das Auslaßventil 17 des Drucksteuerventils 10 setzt sich ebenfalls aus einer Spule 71 mit Ankerführungsrohr sowie einem gegen die Kraft einer Feder 72 verschiebbar angeordneten Anker 73 zusammen, der an seinen einander abgewandten Stirnseiten je einen Ventilkörper 74 und 75 trägt. Der eine Ventilkörper 74 bildet mit einem ersten Ventilsitz 76 ein Einlaßsteuerventil 77 und der andere Ventilkörper 75 mit einem zweiten Ventilsitz 78 ein Auslaßsteuerventil 79.

Über das der Steuerkammer 31 für das Einlaßventil 12 zugeordnete erste Steuerventil 58 ist die Steuerkammer wahlweise über eine Kanalverbindung 82, 83 und 84 mit der Druckmittelausgangskammer 35 (wie dargestellt) oder über die Kanalverbindung 82 und eine Bohrung 85 mit der Druckmitteleingangskammer 30 verbindbar.

Über das der Steuerkammer 36 für das Auslaßventil 17 des Drucksteuerventils 10 zugeordnete zweite Steuerventil 59 ist die Steuerkammer wahlweise mit der Atmosphäre oder (wie dargestellt) über einen Kanal 86 mit der Druckmitteleingangskammer 30 verbindbar.

Die als Steuerventile 58 und 59 dienenden Elektromagnetventile sind über elektrische Anschlüsse 88 ansteuerbar.

Die Funktion des vorstehend beschriebenen Drucksteuerventils 10 wird nachfolgend näher erläutert.

Bei einem vom Fahrzeugführer ausgelösten Bremsvorgang wird von dem Bremsventil 42 über die Druckmittelleitung 41 und den Druckmitteleingang 40 Druckmittel in die Druckmitteleingangskammer 30 eingesteuert. Über die Druckmitteleingangskammer 30 gelangt das Druckmittel zum Einlaßventil 12. Gleichzeitig gelangt Druckmittel über den als Steuerleitung dienenden Kanal 86 und das sich in der Offenstellung befindliche Einlaßsteuerventil 77 des zweiten Steuerventils 59 als Steuerdruck dienendes Druckmittel in die Steuerkammer 36 des Auslaßventils 17 des Drucksteuerventils 10. Das Auslaßsteuerventil 79 des zweiten Steuerventils 59 befindet sich in der Schließstellung.

Das Einlaßsteuerventil 66 des ersten Steuerventils 58 befindet sich in der Schließstellung und das Auslaßsteuerventil 68 dieses Steuerventils befindet sich in der Offenstellung.

Der sich in der Druckmitteleingangskammer 30 aufbauende Druck belastet die Membran 21 des Einlaßventils 12 gegen die Kraft der Feder 32 in Öffnungsrichtung des Einlaßventils und bringt so das Einlaßventil in die Offenstellung. Von der Druckmitteleingangskammer 30 gelangt jetzt Druckmittel durch das geöffnete Einlaßventil 12 in die Druckmittelausgangskammer 35 und von dieser durch den Druckmittelausgang 45 und die mit dem Druckmittelausgang verbundene Druckmittelleitung 46 in den Bremszylinder 47.

Der Druck in der Druckmittelausgangskammer 35 belastet die Membran 25 des Auslaßventils 17 in Öffnungsrichtung des Auslaßventils. Da die Höhe des sich in der Steuerkammer 36 des Auslaßventils 17 aufbauenden Steuerdruckes gleich ist der Höhe des sich in der Druckmittelausgangskammer 35 aufbauenden Verbraucherdruckes, die der Steuerkammer 36 zugewandte Wirkfläche der Membran 25 jedoch größer ist als die der Druckmittelausgangskammer 35 zugewandte Wirkfläche der Membran, verbleibt das Auslaßventil 17 in der Schließstellung.

Der im Druckmittelausgang 45 herrschende Druck ist über die Kanalverbindung 84 über das offene erste Steuerventil 58 und den Kanal 82 auch in der Steuerkammer 31 auf der Rückseite der Membran 21 wirksam. Dadurch gelangt diese nach einem Druckanstieg in einen Schwebezustand. Wird zwecks Entlüftens der Arbeitskammer des Bremszylinders 47 das Bremsventil 42 umgeschaltet, so werden die Druckmittelleitung 41 sowie der mit dieser verbundene Druckmitteleingang 40 über das Auslaßventil des Bremsventils 42 zur Atmosphäre hin entlüftet.

Über das Bremsventil 42 fällt der Druck in der Eingangskammer 30, so daß die Membran 21 den Ventilsitz 14 abdeckt und als Schließventil wirkt. Als Folge davon fällt über den Kanal 86 der Steuerdruck in der Steuerkammer 36 unter der Membran 25 des Auslaßventils 17 zusammen. Das Auslaßventil 17 öffnet und der Bremszylinder 47 wird auf kurzem Weg schnell entlüftet.

Ist der Druck im Bremszylinder 47 und somit auch der Druck in der Druckmittelausgangskammer 35 und in der Druckmitteleingangskammer 30 soweit abgesunken, daß er in etwa die Höhe des Atmosphärendruckes hat, so gelangt das Auslaßventil 17 durch die Kraft der Feder 37 in die Schließstellung. Desgleichen gelangt das Einlaßventil 12 mittels der Kraft der Feder 32 in die Schließstellung.

Soll bei einem Bremsvorgang der Druck im Bremszylinder 47 geregelt werden, so erfolgt dies in bekannter Weise durch Ansteuern der als Elektromagnetventile ausgebildeten Steuerventile 58 und 59.

Zwecks Druckhaltens im Bremszylinder 47 wird das der Steuerkammer 31 des Einlaßventils 12 zugeordnete erste Steuerventil 58 angesteuert, das Einlaßsteuerventil 66 des ersten Steuerventils in die Offenstellung und das Auslaßsteuerventil 68 dieses Steuerventils in die Schließstellung gebracht, und über den Kanal 82 Steuerdruckmittel in die Steuerkammer 31 des Einlaßventils 12 eingesteuert. Der sich in der Steuerkammer 31 aufbauende Steuerdruck bewirkt eine Kraft auf die Membran 21 in Richtung auf dem Ventilsitz 14, wodurch das Einlaßventil 12 in die Schließstellung gebracht wird.

Soll ein geregelter Druckabbau im Bremszylinder 47 erfolgen, so wird in der Steuerkammer 31 des Einlaßventils 12 über das erste Steuerventil 58 durch Schließen von dessen Auslaßsteuerventil 68 und Öffnen des Einlaßsteuerventils 66 von der Eingangskammer 30 her über Kanal 82 ein Druck aufgebaut. Damit schließt das Einlaßventil 12 und sperrt den Eingangsdruck ab. Gleichzeitig wird das der Steuerkammer 36 des Auslaßventils 17 zugeordnete, als Elektromagnetventil ausgebildete zweite Steuerventil 59 in der Weise angesteuert, daß das Einlaßsteuerventil 77 dieses Steuerventils in die Schließstellung gelangt und das Auslaßsteuerventil 79 des Steuerventils geöffnet wird. Der in der Steuerkammer 36 des Auslaßventils 17 befindliche Steuerdruck wird über das geöffnete Auslaßsteuerventil 79 des zweiten Steuerventils 59 und den Entlüftungsraum 52 zur Atmosphäre hin abgesenkt. Die dabei auftretende Druckdifferenz zwischen dem Druck in der Steuerkammer 36 und dem Druck in den Druckmittelausgangskammer 35 bewirkt ein Öffnen des Auslaßventils 17 des Drucksteuerventils 10.

Bei einer Druckanstiegs-Steuerung wird lediglich das erste Steuerventil 58 entsprechend getaktet, um den Druck nach Bedarf stufenweise anzuheben.

In den Figuren 2 und 3 ist ein abweichend von Figur 1 gestaltetes Drucksteuerventil 110 für eine druckluftbetätigte Fahrzeugbremsanlage als zweites Ausführungsbeispiel dargestellt. Für gleiche Elemente in den Figuren 2 und 3 sind die in Figur 1 benutzten Bezugszahlen verwendet.

Das Drucksteuerventil 110 unterscheidet sich von dem Ventil 10 nach Figur 1 im wesentlichen dadurch, daß dem Einlaßsteuerventil 66 des ersten Steuerventils 58 im Gehäuse 11 eine Kammer 90 zugeordnet ist, in welcher der Ventilkörper 63 des Einlaßsteuerventils 66, die Feder 61 und teilweise der Anker 62 des ersten Steuerventils 58 aufgenommen sind (Fig. 3). Von der Kammer 90, welche vom Ventilsitz 65 des Einlaßsteuerventils 66 begrenzt ist, ist die erwähnte Kanalverbindung 82 zur Steuerkammer 31 des Einlaßventils 12 fortgesetzt. In die Kammer 90 mündet ebenfalls die erwähnte Bohrung 85 ein, welche sich zwischen der Druckmitteleingangskammer 30 und dem Ventilsitz 65 des Einlaßsteuerventils 66 erstreckt.

Das Drucksteuerventil 110 ist ferner mit einem Verbindungskanal 92 zwischen der Steuerkammer 31 des Einlaßventils 12 und der Druckmitteleingangskammer 40 versehen. Dieser Verbindungskanal 92 kann in mehreren Varianten ausgebildet sein: Er kann sich als Bohrung 92.1 zwischen der Kanalverbindung 82 und der Druckmitteleingangskammer 30 erstrecken (Figur 2). Oder er kann als die Kammer 90 des Einlaßsteuerventils 66 mit der Druckmitteleingangskammer 30 verbindende Bohrung 92.2 ausgebildet sein (Figur 3). Oder er kann eine Querbohrung 92.3 bilden, welche die Bohrung 85 kreuzt (Figur 3). Oder er kann als die vom Ventilsitz 65 und/oder vom Ventilkörper 63 des Einlaßsteuerventils 66 gebildeten Kontaktflächen unterbrechende Nut 92.4 und/oder 92.5 ausgebildet sein (Figur 3). Auch kann der Verbindungskanal 92 als Durchbruch 92.6 in der Membran 21 des Einlaßventils 12 ausgebildet sein (Figur 2). In allen Varianten ist der Verbindungskanal 92 als Bypass zum vom Ventilsitz 65 und Ventilkörper 63 des ersten Steuerventils 58 gebildeten Einlaßsteuerventil 66 geschaltet. Da der Verbindungskanal 92 einen geringeren Querschnitt als die Kanalverbindung 82 und die Bohrung 85 hat, besitzt er Drosselwirkung, wenn ein vom Fahrer des Fahrzeugs ausgelöster Bremsvorgang einen schnellen Druckabbau am Bremszylinder 47 haben soll.

Das Drucksteuerventil 110 hat folgende Funktion:

Bei einem vom Fahrzeugführer ausgelösten, normalen Bremsvorgang wird vom Bremsventil 42 über die Druckmittelleitung 41 und den Druckmitteleingang 40 Druckmittel in die Druckmitteleingangskammer 30 eingesteuert. Über die Druckmitteleingangskammer 30 gelangt das Druckmittel zum Einlaßventil 12. Gleichzeitig strömt Druckmittel über den als Steuerleitung dienende Kanal 86 und das sich in der Offenstellung befindliche Einlaßsteuerventil 77 des zweiten Steuerventils 59 in die Steuerkammer 36 des Auslaßventils 17 des Drucksteuerventils 110 und hält das Auslaßventil geschlossen. Das Auslaßsteuerventil 79 des zweiten Steuerventils 59 befindet sich dagegen in seiner Schließstellung.

Das Einlaßsteuerventil 66 des ersten Steuerventils 58 nimmt seine Schließstellung und das Auslaßsteuerventil 68 dieses Steuerventils seine Offenstellung ein.

Der sich in der Druckmitteleingangskammer 30 aufbauende Druck belastet die Membran 21 des Einlaßventils 12 gegen die Kraft der Feder 32 in Öffnungsrichtung und bringt so das Einlaßventil 12 in seine Offenstellung. Von der Druckmitteleingangskammer 30 gelangt jetzt Druckmittel durch das geöffnete Einlaßventil 12 in die Druckmittelausgangskammer 35 und von dieser durch den Druckmittelausgang 45 und die Druckmittelleitung 46 in den Bremszylinder 47.

Der Druck in der Druckmittelausgangskammer 35 belastet die Membran 25 des Auslaßventils 17 in Öffnungsrichtung. Da die Höhe des sich in der Steuerkammer 36 des Auslaßventils 17 aufbauenden Steuerdrucks gleich ist der Höhe des sich in der Druckmittelausgangskammer 35 aufbauenden Verbraucherdrucks, die der Steuerkammer 36 zugewandte Wirkfläche der Membran 25 jedoch größer ist als die der Druckmittelausgangskammer 35 zugewandte Wirkfläche der Membran 25, verbleibt das Auslaßventil 17 in der Schließstellung.

Der in der Druckmittelausgangskammer 35 herrschende Druck ist über die Kanalverbindung 84 und 83, über das offene Auslaßsteuerventil 68 des ersten Steuerventils 58 und die Kanalverbindung 82 auch in der Steuerkammer 31 des Einlaßventils 12 auf der Rückseite der Membran 21 wirksam. Dadurch nimmt diese nach einem Druckanstieg einen Schwebezustand ein, so daß sie sich bereits bei kleinen Druckänderungen bewegt, was in der kalten Jahreszeit ein Anfrieren der Membran 21 am Ventilsitz 14 weitgehend verhindert.

Wird zwecks schnellen Entlüftens der Arbeitskammer des Bremszylinders 47 das Bremsventil 42 vom Fahrzeugführer umgeschaltet, so werden die Druckmittelleitung 41 sowie der mit dieser verbundene Druckmitteleingang 40 über das Auslaßventil des Bremsventils 42 zur Atmosphäre hin entlüftet. Über das Bremsventil 42 fällt auch der Druck in der Druckmitteleingangskammer 30 schnell ab, so daß aufgrund des in der Druckmittelausgangskammer 35 herrschenden höheren Drucks, der über die Kanalverbindung 84, 83, 82 auf die Membran 21 wirkt, diese den Ventilsitz 14 abdeckt und das Einlaßventil 12 als Schließventil wirkt. Bei weiterhin fallendem Druck in der Druckmitteleingangskammer 35 baut sich wegen der drosselnden Wirkung des Verbindungskanals 92 der Druck in der Steuerkammer 31 jedoch nur verzögert ab, so daß die Membran 21 in ihrer Schließstellung verharrt. Als Folge dieses schnellen Druckabfalls in der Druckmitteleingangskammer 30 fällt über den Kanal 86 der Steuerdruck in der Steuerkammer 36 unter der Membran 25 des Auslaßventils 17 zusammen. Das Auslaßventil 17 öffnet und der Bremszylinder 47 wird auf kurzem Weg schnell zur Atmosphäre entlüftet.

Ist der Druck im Bremszylinder 47 und somit auch der Druck in der Druckmittelausgangskammer 35 und in der Druckmitteleingangskammer 30 soweit abgesunken, daß er nahezu die Höhe des Atmosphärendruckes hat, so gelangt das Auslaßventil 17 durch die Kraft der Feder 37 in die Schließstellung. Desgleichen verharrt das Einlaßventil 12 aufgrund der Kraft der Feder 32 in der Schließstellung. Ein Restdruck im Bremszylinder 47 kann sich über die Druckmittelausgangskammer 35, die Kanalverbindung 84, 83 und den Verbindungskanal 92 sowie die Druckmitteleingangskammer 30 und dem Bremsventil 42 zur Atmosphäre hin abbauen.

Wenn der Fahrzeugführer den Druck in der Arbeitskammer des Bremszylinders 45 feinfühlig verringern will, so führt ein langsames Bremsdruckabsinken am Bremsventil 42 ebenfalls zu einem langsamen Druckabbau in der Druckmitteleingangskammer 30. Dieser bewirkt über den Verbindungskanal 92 eine zeitgleich ablaufende Druckverringerung in der Steuerkammer 31 des Einlaßventils 12. Weil der Bremsdruck in der Druckmittelausgangskammer 35 nun den Druck in der Steuerkammer 31 übersteigt, öffnet das Einlaßventil 12 und das Druckmittel strömt durch die Druckmitteleingangskammer 30 zum Auslaßventils 42. Die hierbei aufgehobene Schließwirkung des Einlaßventils 12 ermöglicht somit ein feinfühliges Bremsdruckabstufen mittels des Bremsventils 42.

Wegen der Hysterese des Auslaßventils 17 bleibt dieses beim langsamen Bremsdruckabsenken geschlossen.

Soll bei einem Bremsvorgang der Druck im Bremszylinder 47 durch die nicht dargestellte Antiblockiereinrichtung der Fahrzeugbremsanlage geregelt werden, so erfolgt dies in bekannter Weise durch getaktetes Ansteuern der als Elektromagnetventile ausgebildeten Steuerventil 58 und 59:

Zwecks Druckhaltens im Bremszylinder 47 wird das der Steuerkammer 31 des Einlaßventils 12 zugeordnete erste Steuerventil 58 angesteuert, das Einlaßsteuerventil 66 in die Offenstellung und das Auslaßsteuerventil 68 dieses ersten Steuerventils 58 in die Schließstellung gebracht und über die Kanalverbindung 82 Steuerdruckmittel in die Steuerkammer 31 des Einlaßventils 12 eingesteuert. Der sich in der Steuerkammer 31 aufbauende Steuerdruck bewirkt eine Kraft auf die Membran 21 in Richtung auf den Ventilsitz 14, wodurch das Einlaßventil 12 in die Schließstellung gebracht wird. Das dem Auslaßventil 17 zugeordnete zweite Steuerventil 59 wird dagegen nicht angesteuert, so daß das Auslaßventil 17 in seiner Schließstellung bleibt.

Soll ein geregelter Druckabbau im Bremszylinder 47 erfolgen, so wird über das erste Steuerventil 58 durch Schließen von dessen Auslaßsteuerventil 68 und Öffnen des Einlaßsteuerventils 66 von der Druckmitteleingangskammer 30 her über die Bohrung 85 und die Kanalverbindung 82 ein Druck in der Steuerkammer 31 des Einlaßventils 12 aufgebaut. Damit schließt das Einlaßventil 12 und sperrt den Eingangsdruck ab. Gleichzeitig wird das der Steuerkammer 36 des Auslaßventils 17 zugeordnete, als Elektromagnetventil ausgebildete zweite Steuerventil 59 in der Weise angesteuert, daß das Einlaßsteuerventil 77 dieses Steuerventils 59 in die Schließstellung gelangt und das Auslaßsteuerventil 79 des Steuerventils 59 geöffnet wird. Das in der Steuerkammer 36 des Auslaßventils 17 befindliche Steuerdruckmittel wird über das geöffnete Auslaßsteuerventil 79 des zweiten Steuerventils 59 und den Entlüftungsraum 52 zur Atmosphäre hin abgeleitet. Die dabei auftretende Druckdifferenz zwischen dem Druck in der Steuerkammer 36 und dem Druck in der Druckmittelausgangskammer 35 bewirkt ein Öffnen des Auslaßventils 17 des Drucksteuerventils 10.

Bei einer Druckanstiegssteuerung wird lediglich das erste Steuerventil 58 entsprechend getaktet, um den Druck nach Bedarf stufenweise anzuheben. Vorher wird jedoch das Einlaßsteuerventil 77 des zweiten Steuerventils 59 in seine Offenstellung geschaltet, um das Auslaßventil 17 zu schließen.

Wegen der drosselnden Wirkung des Verbindungskanals 92 sind die beim kurzzeitig getakteten Schalten der beiden Steuerventile 58 und 59 im Verbindungskanal 92 auftretenden Luftströmungen von unwesentlicher Bedeutung.

## Patentansprüche

1. Drucksteuerventil (10, 110) für druckluftbetätigte Fahrzeugbremsanlagen, insbesondere mit Antiblockiereinrichtung,
- mit einer Druckmitteleingangskammer (30), die über einen Druckmitteleingang (40) und ein fahrerbetätigbares Bremsventil (42) mit einer Druckmittelquelle verbunden ist,
- mit einer Druckmittelausgangskammer (35), die über einen Druckmittelausgang (45) mit einem Verbraucher (Bremszylinder 47) verbunden ist,
- mit einem Einlaßventil (12), über das die Druckmitteleingangskammer (30) mit der Druckmittelausgangskammer (35) verbindbar ist,
- mit einem Auslaßventil (17), über das die Druckmittelausgangskammer (35) mit einer Entlastungsstelle verbindbar ist,
- mit einem zur Betätigung des Einlaßventils (12) bestimmten Betätigungskolben (Membran 21), der in Schließrichtung des Einlaßventils (12) von einem Druck in einer Steuerkammer (31) beaufschlagbar ist, welche beim elektrisch gesteuerten Halten oder Abbauen des Drucks in der Druckmittelausgangskammer (35) über das Einlaßsteuerventil (66) eines ersten, magnetbetätigbaren Steuerventils (58) mit der Druckmitteleingangskammer (30) verbindbar ist, während beim normalen Bremsen das erste Steuerventil (58) elektrisch stromlos und die Steuerkammer (31) des Einlaßventils (12) über den dabei offenen Ventilsitz (67) des Auslaßsteuerventils (68) des ersten Steuerventils (58) und eine Kanalverbindung (82, 83, 84) mit dem jeweils erreichten Verbraucherdruck verbunden ist,
- und mit einem zur Betätigung des Auslaßventils (17) bestimmten Betätigungskolben (Membran 25), der in Schließrichtung des Auslaßventils (17) von einem Druck in einer Steuerkammer (36) beaufschlagbar ist, welche über ein zweites, magnetbetätigbares Steuerventil (59) mit der Entlastungsstelle verbindbar ist,
dadurch gekennzeichnet,
daß die Steuerkammer (36) des Auslaßventils (17) bei elektrisch stromlosem zweitem Steuerventil (59) mit der Druckmitteleingangskammer (30) verbunden ist.

2. Drucksteuerventil nach Anspruch 1, dadurch gekennzeichnet, daß ein ausgangsseitiger Teil (84) der Kanalverbindung (82, 83, 84) von dem offenen Ventilsitz (67) des Auslaßsteuerventils (68) des Steuerventils (58) zu der Druckmittelausgangskammer (35) geführt ist.

3. Drucksteuerventil nach Anspruch 1, dadurch gekennzeichnet, daß ein bei einer Bremsung mit schnellem Druckabbau im Verbraucher (Bremszylinder 47) Drosselwirkung entfaltender Verbindungskanal (92) zwischen der Steuerkammer (31) des Einlaßventils (12) und der Druckmitteleingangskammer (30) vorgesehen ist.

4. Drucksteuerventil nach Anspruch 3, dadurch gekennzeichnet, daß der Verbindungskanal (92) als Bypass zum vom Ventilsitz (65) und Ventilkörper (63) des ersten Steuerventils (58) gebildeten Einlaßsteuerventil (66) geschaltet ist.

5. Drucksteuerventil nach Anspruch 4, dadurch gekennzeichnet, daß der Verbindungskanal (92) als von der Druckmitteleingangskammer (30) ausgehende Bohrung (92.1) ausgebildet ist, welche in die Kanalverbindung (82) einmündet, die einerseits mit der Steuerkammer (31) des Einlaßventils (12) und andererseits mit der Druckmitteleingangskammer (30) in Verbindung steht.

6. Drucksteuerventil nach Anspruch 4, dadurch gekennzeichnet, daß der Verbindungskanal (92) eine von der Druckmitteleingangskammer (30) ausgehende Bohrung (92.2) bildet, welche in eine dem Einlaßsteuerventil (66) des ersten Steuerventils (58) zugeordnete Kammer (90) einmündet, die vom Ventilsitz (65) des Einlaßsteuerventils (66) begrenzt ist und von der die Kanalverbindung (82) zur Steuerkammer (31) des Einlaßventils (12) ausgeht.

7. Drucksteuerventil nach Anspruch 6, dadurch gekennzeichnet, daß der Verbindungskanal (92) als eine Querbohrung (92.3) ausgebildet ist, welche eine den Ventilsitz (65) des Einlaßsteuerventils (66) und die Druckmitteleingangskammer (30) verbindende Bohrung (85) kreuzt und in die Kammer (90) des ersten Steuerventils (58) mündet.

8. Drucksteuerventil nach Anspruch 4, dadurch gekennzeichnet, daß der Verbindungskanal (92) als die vom Ventilsitz (65) und/oder vom Ventilkörper (63) des Einlaßsteuerventils (66) gebildeten Kontaktflächen unterbrechenden Nut (92.4, 92.5) oder dergleichen ausgebildet ist.

9. Drucksteuerventil nach Anspruch 4, dadurch gekennzeichnet, daß der Verbindungskanal (92) als Durchbruch (92.6) im Betätigungskolben (Membran 21) des Einlaßventils (12) ausgebildet ist.

## Claims

1. Pressure control valve (10, 110) for vehicle brake systems actuated by compressed air, in particular systems having an anti-lock device,
- having a pressure medium inlet chamber (30), which is connected to a pressure medium source via a pressure medium inlet (40) and a driver-actuated brake valve (42),
- having a pressure medium outlet chamber (35), which is connected to a consumption unit (brake cylinder 47) via a pressure medium outlet (45),
- having an inlet valve (12), via which the pressure medium inlet chamber (30) can be connected to the pressure medium outlet chamber (35),
- having an outlet valve (17), via which the pressure medium outlet chamber (35) can be connected to a relief location,
- having an actuating piston (diaphragm 21), which is provided for the actuation of the inlet valve (12) and which can be subjected to a pressure in a control chamber (31) in the closing direction of the inlet valve (12), which control chamber (31) can be connected to the pressure medium inlet chamber (30) via the inlet control valve (66) of a first control valve (58), which can be actuated by a magnet, during the electrically controlled retention or reduction of the pressure in the pressure medium outlet chamber (35) whereas, during normal braking, the first control valve (58) is without electric current and the control chamber (31) of the inlet valve (12) is connected to the particular consumption unit pressure which has been reached via the valve seat (67), which is open in this case, of the outlet control valve (68) of the first control valve (58) and a passage connection (82, 83, 84),
- and having an actuating piston (diaphragm 25), which is provided for the actuation of the outlet valve (17) and which can be subjected to a pressure in a control chamber (36) in the closing direction of the outlet valve (17), which control chamber (36) can be connected to the relief location via a second control valve (59), which can be actuated by a magnet,
- characterised in that
the control chamber (36) of the outlet valve (17) is connected to the pressure medium inlet chamber (30) when the second control valve (59) is without electric current.

2. Pressure control valve according to Claim 1, characterised in that an outlet-end part (84) of the passage connection (82, 83, 84) is led from the open valve seat (67) of the outlet control valve (68) of the control valve (58) to the pressure medium outlet chamber (35).

3. Pressure control valve according to Claim 1, characterised in that a connecting passage (92) developing a throttle effect in the case of a braking operation with rapid reduction of pressure in the consumption unit (brake cylinder 47) is provided between the control chamber (31) of the inlet valve (12) and the pressure medium inlet chamber (30).

4. Pressure control valve according to Claim 3, characterised in that the connecting passage (92) is connected as a bypass to the inlet control valve (66) formed by the valve seat (65) and valve body (63) of the first control valve (58).

5. Pressure control valve according to Claim 4, characterised in that the connecting passage (92) is configured as a hole (92.1) starting from the pressure medium inlet chamber (30), which hole opens into the passage connection (82) which is in connection with the control chamber (31) of the inlet valve (12), on the one hand, and with the pressure medium inlet chamber (30), on the other.

6. Pressure control valve according to Claim 4, characterised in that the connecting passage (92) forms a hole (92.2) starting from the pressure medium inlet chamber (30), which hole opens into a chamber (90) associated with the inlet control valve (66) of the first control valve (58), which chamber (90) is bounded by the valve seat (65) of the inlet control valve (66) and starts from the passage connection (82) to the control chamber (31) of the inlet valve (12).

7. Pressure control valve according to Claim 6, characterised in that the connecting passage (92) is configured as a transverse hole (92.3), which transverse hole crosses a hole (85) connecting the valve seat (65) of the inlet control valve (66) to the pressure medium inlet chamber (30) and opens into the chamber (90) of the first control valve (58).

8. Pressure control valve according to Claim 4, characterised in that the connecting passage (92) is configured as the groove (92.4, 92.5) or the like interrupting the contact surfaces formed by the valve seat (65) and/or by the valve body (63) of the inlet control valve (66).

9. Pressure control valve according to Claim 4, characterised in that the connecting passage (92) is configured as an aperture (92.6) in the actuating piston (diaphragm 21) of the inlet valve (12).

## Revendications

1. Soupape de commande de pression (10, 110) destinée à des installations de freinage de véhicules, actionnées à l'air comprimé et équipées notamment d'un anti-blocage, comprenant :
- une chambre (30) d'entrée du fluide sous pression, reliée à la source de fluide par une entrée (40) et une soupape de frein (42) actionnée par le conducteur
- une chambre (35) de sortie du fluide sous pression, reliée à l'utilisation (cylindre de frein 47) par une sortie (45)
- une soupape d'admission (12), permettant de relier la chambre d'entrée (30) à la chambre de sortie (35)
- une soupape d'échappement (17), permettant de relier la chambre de sortie (35) à un point de décharge
- un piston de manoeuvre (membrane 21) déterminé pour actionner la soupape d'admission (12) et qui commande sa fermeture lorsqu'une pression s'exerce dans une chambre de commande (31), laquelle peut être mise en liaison avec la chambre d'entrée de fluide sous pression (30) par l'intermédiaire de la soupape de commande d'admission (66) d'une première soupape de commande (58) à commande magnétique, par le maintien ou la disparition de la pression dans la chambre de sortie (35) commandé électriquement, tandis qu'en freinage normal la première soupape de commande (58) n'est pas alimentée en courant électrique et que la chambre de commande (31) de la soupape d'admission (12) reliée à la pression régnant alors à l'utilisation, par l'intermédiaire du siège de soupape (67), alors ouvert, de la soupape de commande d'échappement (68) de la première soupape de commande (58) et d'une liaison par des canaux (82, 83, 84).
- un piston de manoeuvre (membrane 25) déterminé pour actionner la soupape d'échappement (17) et qui commande sa fermeture lorsqu'une pression s'exerce dans une chambre de commande (36) qui peut être reliée au point de décharge par une seconde soupape de commande (59) à commande magnétique, caractérisée en ce que la chambre de commande (36) de la soupape d'échappement (17) est reliée à la chambre (30) d'entrée du fluide sous pression, lorsque la seconde soupape de commande (59) n'est pas alimentée en courant électrique.

2. Soupape de commande selon la revendication 1, caractérisée en ce que la partie (84) côté sortie de la liaison par canaux (82, 83, 84) s'étend du siège de la soupape ouverte (67) de la soupape (68) faisant partie de la soupape de commande (58) jusqu'à la chambre de sortie (35) du fluide sous pression.

3. Soupape de commande selon la revendication 1, caractérisé en ce que pour le cas d'un freinage avec chute rapide de la pression à l'utilisation (cylindre de frein 47), il est prévu entre la chambre de commande (31) de la soupape d'admission (12) et la chambre d'entrée (30), un canal de liaison (92) à effet d'étranglement.

4. Soupape de commande selon la revendication 3, caractérisée en ce que le canal de liaison (92) est monté en dérivation par rapport à la soupape de commande d'admission (66) constituée du siège de soupape (65) et du corps de soupape (63) de la première soupape de commande (58).

5. Soupape de commande selon la revendication 4, caractérisée en ce que le canal de liaison (92) est constitué par un alésage partant de la chambre d'entrée (30) et débouchant dans le canal reliant la chambre de commande (31) de la soupape d'admission (12) et la chambre d'entrée (30).

6. Soupape de commande selon la revendication 4, caractérisée en ce que le canal de liaison (92) comporte un alésage (92.2) partant de la chambre d'entrée (30) et débouchant dans une chambre (90) associée à la soupape de commande d'admission (66) faisant partie de la première soupape de commande (58), cette chambre étant délimitée par le siège (65) de la soupape de commande d'admission (66) et s'étendant du canal de liaison (82) jusqu'à la chambre de commande (31) de la soupape d'admission (12).

7. Soupape de commande selon la revendication 6, caractérisée en ce que le canal de liaison (92) est constitué d'un alésage transversal (92.3) croisant un alésage (85) qui relie le siège (65) de la soupape de commande d'admission (66) et la chambre d'entrée (30) et qui débouche dans la chambre (90) de la première soupape de commande (58).

8. Soupape de commande selon la revendication 4, caractérisée en ce que le canal de liaison (92) est constitué par une rainure (92.4, 92.5) ou disposition analogue interrompue dans les surfaces de contact portées par le siège de soupape (65) et/ou le corps de soupape (63) de la soupape de commande d'admission (66).

9. Soupape de commande selon la revendication 4, caractérisée en ce que le canal de liaison (92) est constitué par un perçage (92.6) à travers le piston de manoeuvre (membrane 21) de la soupape d'admission (12).
